# EUROPEAN PATENT SPECIFICATION

(11) **EP 2 820 539 B1**
(45) Date of publication and mention of the grant of the patent: **28.10.2020**
(21) Application number: 13710224.0
(22) Date of filing: 01.03.2013
(51) Int. Cl.: G06F 8/61

(54) **DISTRIBUTION OF APPLICATION FILES**
VERTEILUNG VON ANWENDUNGSDATEIEN
DISTRIBUTION DE FICHIERS D'APPLICATION

(30) Priority: 02.03.2012 US 201213411048
(43) Date of publication of application: 07.01.2015
(73) Proprietor: Google LLC, Mountain View, CA 94043 (US)
(72) Inventor: FIRMAN, Ilya, San Mateo, CA 94401 (US); KIRKPATRICK, Ficus, San Francisco, CA 94117 (US)
(74) Representative: Hewett, Jonathan Michael Richard
(86) International application number: PCT/US2013/028634
(87) International publication number: WO 2013/130984

(56) References cited:
- EP-A2- 2 395 428
- US-A1- 2005 132 382
- US-A1- 2009 307 682
- US-A1- 2010 262 619

## Description

### TECHNICAL FIELD

This document generally relates to software distribution systems.

### BACKGROUND

Software applications may be sold and distributed using a variety of models. An application marketplace model is one example of a model that is sometimes used to distribute applications, or apps, targeted to mobile devices and other computing devices. In such a model, software developers may submit their applications to be published in an online application marketplace, and the marketplace may provide an interface that allows users to browse, search for, and purchase the published applications.

When a user identifies an application that he or she wishes to obtain, the application marketplace may generally facilitate the transaction. For example, in the case of a free application, the application marketplace may simply provide the application for download to one or more of the user's devices. In the case of a paid application, the application marketplace may provide the application for download, and may also provide services related to collecting payment from the user and compensating the software developer. Application marketplaces may typically be operated by organizations that are trusted by both software developers and users to handle any such application transactions appropriately.

US 2010/262619 relates to a mobile device application server system, comprising a database, a processor, and a memory comprising instructions stored thereon that are executable by the processor to perform a method of providing applications to mobile devices. US 2005/132382 relates to a system and method for managing and communicating software updates. US 2009/307682 relates to acquisition of updates for application programs.

### SUMMARY

A computer-implemented system for distributing application files according to claim 1 and a computer-implemented method for determining application files for download according to claim 13 are provided.

This document describes systems and techniques that allow software developers to use a software distribution system (e.g., an application marketplace) to distribute multiple application files that are associated with an application. In some implementations, a software developer may upload an application binary for a particular application to the software distribution system, and may also upload one or more supplemental files that are associated with the application. The supplemental files may include, for example, graphics, audio, or multimedia assets that are associated with the application. The supplemental files may also include any other appropriate data that the developer wishes to associate with the application. In some cases, the supplemental files may be larger than the application binary itself.

When a user requests download of the software application from the software distribution system, e.g., for an initial installation of the application or for an update of the application, the system may respond by providing the application binary and the supplemental files for download to the user's device. In some instances, the system may provide only certain ones of the files for download to the user's device, e.g., when the system determines that one or more of the requested files is already present on the device.

According to the systems and techniques described here, the software distribution system may include an application marketplace client that executes on a user's computing device and an application marketplace server system that operates remotely from the computing device. When the user requests a download of an application from the application marketplace, the application marketplace server system may identify the application files that are associated with the application (e.g., both the application binary file and the one or more supplemental files), and may provide information about the application files to the application marketplace client. In turn, the application marketplace client may use the information provided by the application marketplace server system to determine which, if any, of the application files to download. For example, the application marketplace client may determine whether any of the application files are already stored on the computing device, and may initiate download of any application files that are not present on the device or that have been updated to newer versions than are present on the device.

In certain instances, various implementations of the systems and techniques described here may provide one or more advantages. For example, in some software distribution systems, the size of application binaries may be limited, e.g., due to technological limitations, functional considerations about download speeds and/or bandwidth, or for other reasons. In such cases, an application binary that would otherwise be too large to be distributed through the software distribution system may be split into multiple binaries (e.g., a core application binary that is smaller than the size limitation of the distribution system, and a supplemental binary that may be many times larger than the core application binary) for distribution by the system. In addition, by splitting the application binaries into two or more files, portions of the application (e.g., the core features and other functionality provided in the application binary) may be updated without re-distributing other portions of the application (e.g., graphics files, sound files, additional levels or other content of a game application, and the like). Another advantage of the systems and techniques described here is that a user may be able to side-load a supplemental binary file that is potentially large in size rather than downloading the file using over-the-air resources. For example, the user may download the supplemental binary using a high-speed network connection on a desktop computer, and transfer the supplemental binary to the device over a wired connection, thereby potentially saving time and/or bandwidth.

In one implementation, a computer-implemented system for distributing application files to a computing device from an application marketplace is disclosed. The system comprises a server system interface arranged to receive, from a client application of one of a plurality of client computing devices, a communication that corresponds to a request to obtain or update a software application for the one client computing device. The system also comprises an application marketplace server system programmed to: (a) identify, in response to the communication, application files that include an application binary file that corresponds to the software application and one or more supplemental files associated with the software application, and to send information that relates to the application files to the client application in response to receiving the communication, and (b) identify stored files on the computing device that correspond to the application files, determine particular ones of the application files to download based on the identified stored files and the information that relates to the application files sent from the application marketplace server system, and initiate download of the particular ones of the application files. The client application can comprise an application marketplace client that corresponds to the application marketplace server system and is programmed to download files for a plurality of different applications from the application marketplace server system. Also, the information that relates to the application files can comprise version information for each of the application files, and the application marketplace client can be programmed to compare the version information to respective versions of the stored files to determine whether to download particular ones of the application files.

In some aspects, the application marketplace client is programmed to remove previous versions of the stored files from the computing device after downloading newer versions of the stored files. The application marketplace server system can also be programmed to limit the application binary file to a defined maximum size, and wherein an aggregate size of the particular ones of the application files exceeds the maximum size of the application binary file. Moreover, the client application can be programmed to identify the stored files by analyzing files stored in a directory on the computing device that corresponds to the software application. In other aspects, the application marketplace server system is programmed to generate a file signature for the application files based on analyzing portions of the application files, and wherein the client application is programmed to verify the file signature before initiating installation of the application files. The server system can also be programmed to send, to the client application, information about the portions of the application files that were analyzed by the application marketplace server system, and the client application is programmed to verify the file signature by generating a verification signature for the application files based on analyzing the portions of the application files that were analyzed by the marketplace server system, and comparing the file signature to the verification signature.

In yet other aspects, particular versions of the supplemental files associated with the software application are targeted to respective device groups, and wherein the application marketplace server system is programmed to identify the particular versions of the supplemental files for distribution to the computing device based on a determination of a particular device group to which the computing device belongs. Moreover, the information that relates to the application files can comprise size information for particular ones of the application files, and wherein the client application is programmed to display an indicator of progress of the download of the particular ones of the application files, the indicator showing a ratio of an amount downloaded to an aggregate size of the particular ones of the application files. The client application can also be programmed to initiate installation of the application files after the download of the particular ones of the application files is complete, and the application marketplace server system can be programmed to download files in response to verified requests from (a) an application marketplace application that that corresponds to the application marketplace server system and is programmed to download files for a plurality of different applications from the application marketplace server system; and (b) from particular applications requesting the downloaded files for their own use.

In another implementation, a computer-implemented method for determining application files for download to a computing device is disclosed, and comprises receiving, with an application marketplace client executing on a computing device, a request to obtain or update a software application that is associated with a plurality of application files and that is configured to execute on the computing device; receiving, with the application marketplace client and from an application marketplace server system that operates remotely from the computing device, information that relates to the application files; identifying stored files on the computing device that correspond to the application files; determining particular ones of the application files to download based on the identified stored files and the received information that relates to the application files; and initiating download of the determined particular ones of the application files. The method can also include identifying a failure by the application marketplace client to download one or more files, and instituting download of the one or more files from the marketplace server system by an application that is programmed to use the one or more files after the one or more files are downloaded. Moreover, the the information that relates to the application files can comprise version information for particular ones of the application files, and wherein the method further comprises comparing the version information to respective versions of the stored files to determine whether to download particular ones of the application files. The method can also involve automatically removing previous versions of the stored files from the computing device after downloading newer versions of the stored files.

In other aspects, the method further comprises identifying the stored files by analyzing files stored in a directory on the computing device that corresponds to the software application or can also comprise, before initiating installation of the application files, verifying a file signature generated by the application marketplace server system for the application files by analyzing portions of the application files. Moreover, the method can comprise receiving, from the application marketplace server system, information about the portions of the application files that were analyzed by the application marketplace server system, and verifying the file signature by generating a verification signature for the application files based on analyzing the portions of the application files that were analyzed by the marketplace server system, and comparing the file signature to the verification signature.

In yet another implementation, a computer-implemented method for determining applications for download to a computing device from an application marketplace is disclosed. The method comprises receiving, from an application marketplace client of one of a plurality of client computing devices, a communication that corresponds to a request to obtain or update a software application for the one client computing device; identifying, in response to the communication, application files that include an application binary file that corresponds to the software application and one or more supplemental files associated with the software application, and to send information that relates to the application files to the application marketplace client in response to receiving the communication, and initiating download of particular ones of the application files in response to an identification of stored files on the computing device that correspond to the application files, and determining the particular ones of the application files based on the identified stored files and the information that relates to the application files sent from the application marketplace server system.

The details of one or more embodiments are set forth in the accompanying drawings and the description below. Other features and advantages will be apparent from the description and drawings, and from the claims.

### DESCRIPTION OF DRAWINGS

FIG. 1 is a conceptual diagram showing an example of an environment for publishing and distributing software applications.
FIG. 2 is a diagram of an example user interface for uploading application files to a software distribution system.
FIG. 3 is a system diagram of a software distribution system for distributing application files associated with a software application.
FIG. 4 is a swim-lane diagram of an example process for distributing application files associated with a software application.
FIG. 5 is an example of a computer device and a mobile computer device that can be used to implement the systems and techniques described here.

Like reference symbols in the various drawings indicate like elements.

### DETAILED DESCRIPTION

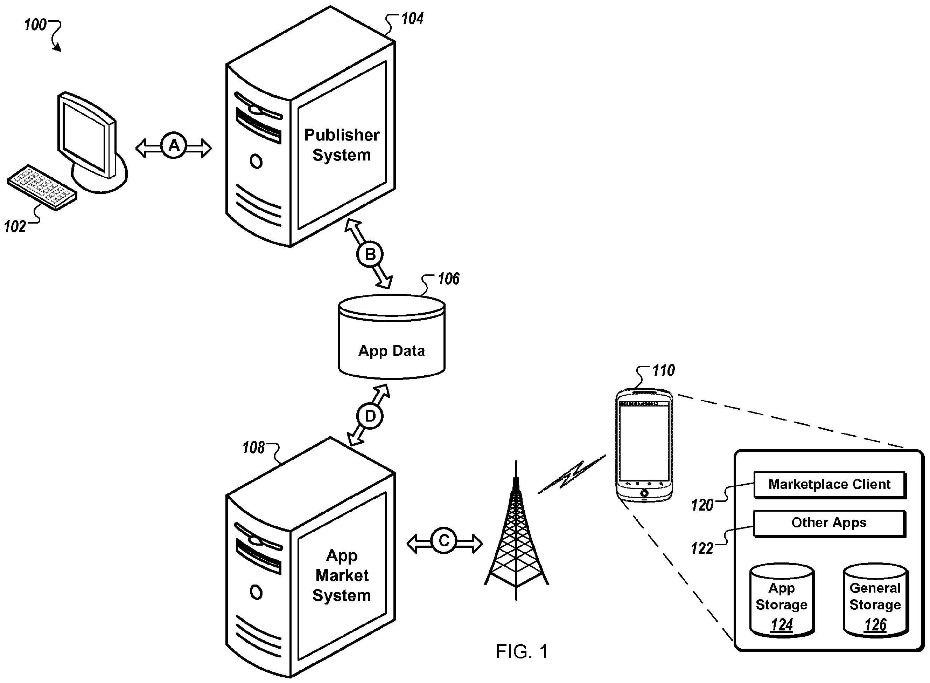

FIG. 1 is a conceptual diagram showing an example of an environment 100 for publishing and distributing software applications. In the environment 100, a software publisher using a computing device 102 may interact with a publisher system 104, as shown by the arrow labeled A, to upload and/or publish software applications for distribution by an application market system 108.

The software publisher may also use publisher system 104 to upload one or more supplemental files to the system, and associate the supplemental files with a particular application such that the supplemental files are distributed with the application. For example, in some cases, a software publisher may wish to distribute certain application-related content separately from the application binary file itself, and may wish to use the distribution capabilities of the application market system 108 rather than distributing the files outside the context of the application market system 108, e.g., by hosting the files on a separate file server operated by the software publisher.

The supplemental files may include different types of content, depending on the types of data and/or content that the software publisher wants to distribute separately from the application binary. For example, the software publisher may include graphics, audio, or multimedia data in the supplemental files, where such content is designed to be accessed by the application that the developer is uploading. As another example, the software publisher may use supplemental files as a way to distribute templates, documentation, or other types of documents for use with the application. In some implementations, the supplemental files may be of any appropriate file type including, for example, an opaque binary blob, a ZIP file that includes one or more compressed or uncompressed files for use with the application, or any other file type that is compatible with the particular implementation.

By separating the information stored in the supplemental files from the application binary, the software publisher may be able to update certain portions of the application data without affecting other portions of the application data. For example, the software publisher may separate the application functionality into a primary application binary that includes the core features of the application, and one or more supplemental files that include graphics and/or audio files that are used by the application. In such an example, the software publisher may be able to publish an update of the graphics and/or audio files by updating the supplemental file, while leaving the application binary as is. Conversely, the software publisher may be able to publish an update of the core features included in the application binary, but the graphics and audio files may remain unchanged. In either case, the application market system 108 may facilitate download of only the updated files to a user's client device as described below.

In some implementations, the software publisher may also use publisher system 104 to define particular devices, device types, or device groups to which particular supplemental files associated with the application are to be targeted. For example, the software publisher may publish an application binary that may be configured to execute on a number of different devices or device types, but may use different supplemental files that are targeted specifically to a particular device or device type. For example, the core functionality of an application may be included in the application binary file, which may include multiple code paths to allow for proper execution on a number of different devices. In such an example, the software publisher may develop multiple different supplemental files, each of which is specifically targeted to a particular device, device type, or device group. For example, the software publisher may develop one supplemental file with normal graphics that is targeted to a mobile device with a small screen size and a standard graphics processor, and may develop another supplemental file with advanced graphics that is targeted to a device with a larger screen size and an advanced graphics processor.

In such cases, the publisher system 104 may provide a user interface that allows the software publisher to associate particular versions of the supplemental files with particular respective device groups, such that, when a user requests download of the application, the application marketplace can determine which of the various supplemental file versions is appropriate for the user's particular device. For example, the software publisher may specify that one version of the supplemental file is to be distributed to a smartphone having a small screen size, while another version of the supplemental file is to be distributed to a tablet having an extra-large (by comparison) screen size. In such an example, a particular supplemental file may include similar audio assets to one or more other supplemental files, but the graphics assets included in the particular supplemental file may be specifically targeted to a particular screen size or graphics processor.

The device groups may be defined in the publisher system 104 using various device attributes and/or combinations of device attributes. For example, device groups may be defined using three dimensions, which include an installed device framework, a display screen size, and a graphics processing capability. Other and/or additional dimensions may also be used in the system, including for example, dimensions related to an OpenGL ES version, the native platform of a computing device (e.g., ARM EABI v7, INTEL, etc.), various device hardware or software features (e.g., camera, Bluetooth, Wi-Fi, telephony, etc.), the device's carrier, and/or its location.

Software publishers may choose to use one or more of the available dimensions when defining a particular device group with the publisher system 104. For example, in some cases, a software publisher may have different versions of a supplemental file that are all related to different device frameworks (e.g., one version for OS version 1.6 to 1.8, a second version for OS version 2.0 to 2.2, and a third version for OS version 3.0 and above). In such cases, the software publisher may define three different device groups that are only distinguished by the device framework dimension. In other cases, the software publisher may choose to further refine the device groups using additional and/or different dimensions. It should be understood that the publisher system 104 may, in various implementations, be configured to provide as many or as few dimensions as are appropriate for the particular implementation being provided. By defining the device groups using multiple different device attribute combinations, the software publisher may be able to specify distribution of its supplemental file versions using any appropriate level of granularity. Example techniques for targeting particular versions of an application to particular device models or devices types are described in co-pending U.S. Application Serial Number 13/187,198, filed July 20, 2011, and titled "Multiple Application Versions." In particular, the techniques described in that application may be carried out by the techniques discussed in the instant application, by allowing developers to specify each version of an application as consisting of a different package of files, such as a core binary file, and different supplemental files based on the version provided. The proper version to provide to a user may then be determined (e.g., by a user selecting a version or by a marketplace identifying the type of device requesting the application) and may then refer to the developer-provided device package definitions, so as to select the files in the definition that corresponds to the identified device type.

Communication between computing device 102 and the application publisher system 104 may occur over any appropriate network (e.g., Internet, LAN, WAN, wireless broadband, or any combination thereof). Computing device 102 is depicted as a desktop computer, but other types of computing devices (e.g., laptop computers, netbooks, tablets, smartphones, set-top boxes, and the like) may also communicate with publisher system 104. Similarly, publisher system 104 is depicted as a stand-alone server, but publisher system 104 may represent a cluster of servers, a server farm, or other groupings of servers that can be used to host the functionality of publisher system 104. In some implementations, publisher system 104 may be operated by a trusted organization that provides the publishing services described here.

Upon receiving instructions from the software developer to publish the application, including the supplemental files that are associated with the application, publisher system 104 may write certain information about the application to one or more data structures in application data storage 106, as shown by the arrow labeled B. The data structures may generally be used to describe the application and its associated application files, which may include the application binary file and the supplemental files associated with the application. As an example, the data structures may include data such as version information, size information, download location information, and the like, for each of the application files. In some implementations, the data structures may also include information relating to a device group to which a particular version of one or more of the files is targeted. The data structures may also be used to store other appropriate metadata associated with the application (e.g., pricing information, a textual description, screen shots, icons, an account for receiving payments from users who download the application, etc.).

After the application has been published by publisher system 104, the application may appear as an application for download via application market system 108, which may be configured to read the data structures stored in application data storage 106. According to the techniques described here, when an application having associated supplemental files is published on the application market system 108, the system may be used to identify the application files that are associated with a particular application being requested, and may provide information about the files, e.g., to a marketplace client executing on the user's computing device. For example, the application market system 108 may provide information that allows the marketplace client to determine which of the files should be downloaded to the device, such as size and version information associated with the application files. If the marketplace client determines that one or more of the particular application files is already present on the client device, the marketplace client may not download those particular application files.

In environment 100, users may access the application market system 108 using a number of different client computing devices, e.g., device 110, as shown by the arrow labeled C. Mobile client computing devices may communicate with the application market system 108 by way of a wireless communication channel as shown, or by way of any other appropriate communication channel. Other computing devices (not shown) may also communicate with the application market system 108, e.g., by way of the Internet or any other appropriate communication channel.

As shown, device 110 may be configured to execute a marketplace client 120 and one or more other applications 122. Marketplace client 120 may execute on client device 110, and may facilitate communication with the application market system 108. The marketplace client 120 and the other applications 122 may be stored in a portion of the device's memory that is provided for application storage 124, while other files may be stored in a separate portion of the device's memory, such as general storage 126. Device 110 may include any number of appropriate memory partitions, some of which may be more secure than others. For example, the application storage 124 may be at least somewhat secure (e.g., only accessible by the device framework), while the general storage 126 may be more accessible (e.g., by applications executing on the device). In some implementations, when applications are downloaded to device 110, the applications may first be stored in a cache partition (not shown) before being transferred to a more permanent storage location, such as application storage 124. In such implementations, the cache partition may be limited in size (e.g., 50MB), and may serve as a functional limit on the size of an application binary file that is to be downloaded to the device.

Device 110 may submit a number of different application-related requests to application market system 108. In some implementations, such requests may be made via marketplace client 120 executing on device 110. For example, a user of device 110 may submit a request via the marketplace client 120 to browse through various applications available on the market, or may submit a search request using keywords to find applications on the market that are associated with the entered keywords. As another example, marketplace client 120 may maintain a list of applications that have been downloaded to device 110, and may periodically communicate with the application market system 108 to determine whether updates are available for the applications. In other implementations, update notices may be pushed from the application market system 108 to device 110 rather than being requested by the device. The update notices may, in turn, cause the device 110 to subsequently request download of an updated version of an application that the device 110 had previously downloaded.

When device 110 submits a request to the application market system 108, e.g., a request to acquire or update a particular software application on the market, the system 108 may query the application data storage106 to identify information about the application that is responsive to the request. The information about the application may include, for example, information about the application binary and any supplemental files that are associated with the application. The application market system 108 may then provide the information back to the marketplace client 120 in a response to the request.

For example, in response to a request for download of an application, the application market system 108 may identify the application binary file that is responsive to the request, and may also identify any supplemental files that are associated with the application. The application market system 108 may then provide to the marketplace client 120 certain metadata about the application files, such as the file size, version information, and/or other information that may allow the marketplace client 120 to determine which of the application files to download to the device 110. In one example, the application market system 108 may determine that the most recent version of a particular application available to device 110 is version 2.1, which is 7.2 MB in size, and that the application is associated with version 2.0 of a supplemental file, which is 46.3 MB in size.

The marketplace client 120 may then use the metadata information to determine whether any of the application files are already present on the device 110, e.g., by comparing the version and/or size metadata to files that are stored on device 110. If any of the application files are determined to match files that are already on the device 110, the marketplace client 120 may not download those particular application files, and may instead only download the application files that are not stored on the device. Continuing with the example above, the marketplace client 120 may determine whether the version 2.1 application binary is already stored on the device 110, e.g., by scanning the application storage 124 for the file. If the application binary file is present, and the version and size of the file match the version and size information provided by the application market system 108, then the marketplace client 120 may elect not to download the application binary file. If the application binary file does not exist, or if an older version of the application binary is present, or if the size of the application binary does not match the size information received from the application market system 108, then the marketplace client 120 may determine that the application binary should be downloaded, and may subsequently initiate the download.

The authenticity of a downloaded binary may also be checked, such as to ensure it does not contain malicious code. For example, the binary may have been signed by the developer, or a check sum may have been computed. The marketplace client 120 may be programmed to check the signature, checksum, or other authenticating mechanism before installing the binary, so as to maintain security against such malicious software.

Similarly, the marketplace client 120 may also determine whether version 2.0 of the supplemental file is present on the device 110. In some implementations, the supplemental files for a particular application may be stored in a predetermined storage location in the general storage 126 of the device 110, such as in a directory that is named using a convention that identifies the directory as being associated with the application. If the current version of the supplemental file is present in the predetermined directory, and the file is the appropriate size, then the marketplace client 120 may skip the download of the supplemental file. On the other hand, if the supplemental file is not present, or is out of date, or if the size of the supplemental file is different than the size of the file indicated by the application market system 108, then the marketplace client 120 may initiate download of the supplemental file. The downloads of multiple application files, including the application binary file and any associated supplemental files, may occur in series (e.g., one after another in a predefined order) or in parallel (e.g., at the same time, or during an overlapping time interval), depending on the particular implementation.

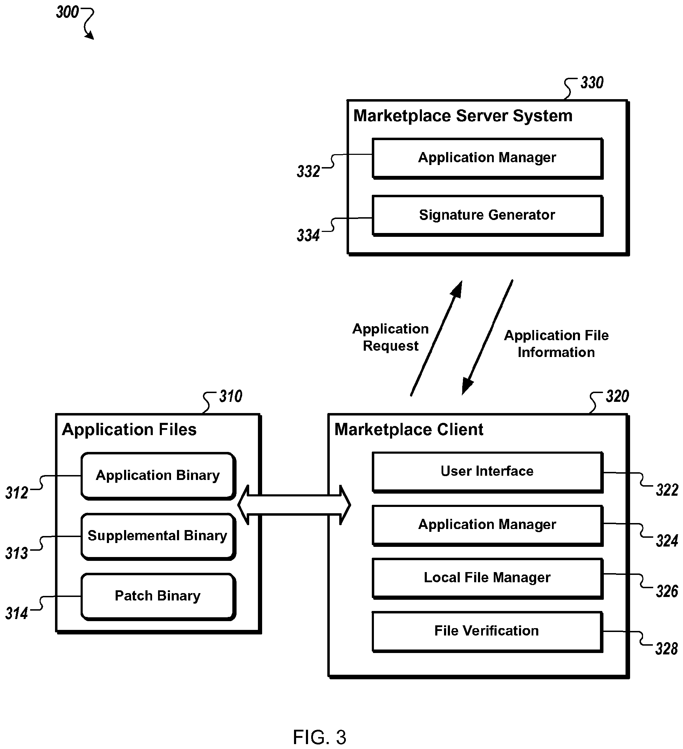

The marketplace client 120 may also verify a signature or checksum for particular ones of (or all of) the files (whether a main binary or supplemental files) before installing them. For example, developers may be permitted to sign their files, and the marketplace client 120 may verify the signatures in one of various familiar manners. Such verification is also described below with respect to the signature generator 334 and file verifier 328 of FIG. 3.

During the download process, the marketplace client 120 may display a unified progress bar that reflects the download status of all of the application files that are being downloaded. For example, if only one of the application files is being downloaded, then the download progress bar may show the portion of the file that has been downloaded as a percentage of the file size. If the device is downloading multiple application files, the download progress bar may show the portion that has been downloaded as a percentage of the total download size.

After the download has completed, the marketplace client 120 may facilitate the removal or archival of the outdated application files. For example, the marketplace client 120 may delete the files from device 110, or may archive the files in a manner that may allow the user to restore the files at a later point in time. In implementations where the supplemental files are stored in a predetermined directory on the device, e.g., in general storage 126, the marketplace client 120 may archive the outdated files by moving them to a different directory than where the current supplemental files are stored.

The marketplace client 120 may also initiate the installation of the downloaded application files after the download has completed. In some implementations, the marketplace client 120 may wait until all of the downloads of all the application files are complete before initiating the installation. In other implementations, the marketplace client 120 may stagger the downloads and install the application files as they are received. For example, the marketplace client 120 may first download the application binary and initiate installation of the application binary. Then, after the installation of the application binary, the marketplace client 120 may initiate the download and installation of the supplemental files.

In some implementations, the application market system 108 may impose limits on the maximum size of an application binary. These size limits may be enforced for a number of different reasons, such as to ensure that the application binary can be downloaded to the cache partition of a device as described above, or to limit bandwidth usage (e.g., on communications that charge for bandwidth, or that throttle or otherwise limit bandwidth) for users of the system. Regardless of the reasons for any size limits that are imposed, the systems and techniques described here may allow a software developer to publish and distribute application files that exceed the maximum size of the application binary by including portions of the application content in separate supplemental files. Continuing with the example above, the system may have a 50 MB limit on the size of an application binary, but the software developer may still distribute an application that is larger than the 50 MB limit by distributing the application in separate files (e.g., in an application binary that is 7.2 MB in size and a supplemental file that is 46.3 MB).

Such separation of the application into two or more application files may also provide other benefits in certain implementations. For example, separating the application into multiple files may allow a software developer to update portions of an application (e.g., portions included in the application binary itself) without updating other portions of the application (e.g., portions included in the supplemental file). As another example, certain portions of the application may be downloaded over-the-air, e.g., using a wireless broadband communications channel, while a larger supplemental file may be side-loaded onto a user's device, e.g., by downloading the supplemental file to a desktop computer via a high-speed network connection, and transferring the file to the device using a local wired or wireless connection. Such first portion may also be downloaded by a first type of wireless network that charges for or limits bandwidth (e.g., a 3G or 4G network) and the supplemental file may be downloaded via a different type of network, such as a home or business WiFi network that is connected to a wired network that does not charge for extra bandwidth or otherwise limit bandwidth in an appreciable manner. The client device may be programmed to trigger the supplemental download as soon as a component on the device recognizes that the device has become connected to such a network-though the device may first request authorization from a user of the device to begin the supplemental download, particularly if the component identifies that the current network has not been connected to before or has been identified by the user as a public network (e.g., the user is at an airport and may not be connected to the network long enough to successfully complete the supplemental download).

Although application publisher system 104, application data storage 106, and application market system 108 are shown separately for purposes of illustration, it should be understood that the functionality provided by the systems shown in environment 100 may be provided by fewer devices or systems (e.g., combining multiple devices or systems into a single device or system), may be distributed amongst additional devices or system, or may be provided by different devices or systems than those shown.

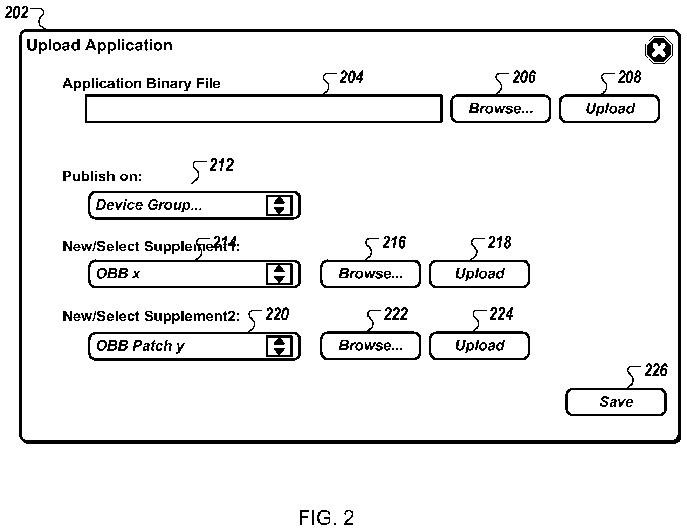

FIG. 2 is a diagram of an example user interface 202 for uploading application files to a software distribution system. User interface 202 may serve as a portion of a frontend interface for a publishing system, e.g., publisher system 104, and may allow software publishers to interact with the system. User interface 202 may provide a number of different controls and inputs to allow a software publisher to upload an application and to associate the application with one or more supplemental files to be distributed with the application. Although user interface 202 is shown as including a specific configuration of text boxes 204, 210, buttons 206, 208, 216, 218, 222, 224, and 226, and drop-down boxes 212, 214, and 220, it should be understood that other configurations and/or input mechanisms may also be provided.

In the example user interface 202, a software publisher may specify the path of an application binary for upload in text box 204. The application binary may correspond to a particular version of a software application that the software publisher wishes to distribute through an application market system, such as system 108. As illustrated, user interface 202 may also include a browse button 206 that allows the software publisher to browse the file system of the local computing device, or of other accessible computing devices, to specify the path to the application binary. After the path to the application binary has been entered, the software publisher may click the upload button 208 to upload the binary to the publisher system.

User interface 202 may also include a text box 210 that allows the software publisher to describe recent changes that have been made to the application. For example, in cases where the application version that is to be uploaded is an update to a previous application version, the software publisher may enter text in the form of release notes that may be presented to users when they are presented with the update. Such information may be helpful to the user in deciding whether or not to install the update on his or her computing device, and to potentially alert the user to new features that may have been added to the application since the last update.

User interface 202 may also include a drop-down box 212, or another appropriate control, that allows the software publisher to publish the application binary and/or the supplemental files on a particular device group. A particular device group may correspond to a group of devices or types of devices to which the application version and/or the supplemental file versions are being targeted. For example, one device group may be associated with smartphones, while another device group may be associated with tablets, and yet another device group may be associated with set-top computing devices. As another example, a device group may target smartphones with a small or normal screen size, while another device group may target smartphones with a large or extra-large screen size. The use of device groups as described here may allow software developers to create different versions of their application files that are optimized for or otherwise tailored to a particular device or group of devices, and may provide software publishers with increased control over how the various versions are distributed to particular devices.

In some implementations, the drop-down box 212 may provide a suggested device group that has been preselected from the defined device groups, e.g., based on information that has been parsed from a manifest file associated with the application binary. In these cases, the software publisher may accept the suggested device group for the application version and the associated supplemental files, or may be allowed to choose a different device group available in the drop-down box.

User interface 202 may also include drop-down boxes 214, 220 and other appropriate controls, that allow the software publisher to associate one or more supplemental files with the application being uploaded. The drop-down boxes 214, 220 may be pre-populated with supplemental files that have previously been uploaded in association with current or other versions of the application binary, and which the user may wish to associate with the application being uploaded. In addition, the interface 202 may provide buttons 216, 218, 222, 224 that allow the user to browse for and upload additional supplemental files as appropriate.

While two supplemental files, or attachments, are provided in this particular example, a system may permit a developer to submit an arbitrarily long list of supplemental files, each with a label or file name to identify the file. For example, a developer might want to provide a first central binary, and a various groups of media files as supplemental files for the main binary (e.g., graphics for display with an application when it is executing). The central binary may be the same for any device on which the application is executed, but different media files can be provided to user devices based on the screen resolution of a particular device. For example, if there are four relevant screen resolutions and 20 graphics files the developer wants to use, a developer could provide 80 total files in four groups.

The system may also provide mechanisms for a developer to organize such groups, by providing a user interface that allows the developer to "attach" new files in a hierarchy that is indented for each sub-level, and to define groups that are not files themselves (but could be files) but that represent one or more sub-files. For example, a user interface paradigm that relies on folders may be presented, and a developer may have different branches in the hierarchy, and then define that sub-branches of those branches include files for a particular device type. For example, a developer may provide example background graphics for an application, and could places the graphics under a "media" folder, and further under a "backgrounds" sub-folder. Within that sub-folder may be sub-folders that the developer associates with particular device types, such as folders "640x480," "1024x768," and 1280x1024." Inside each of these final folders may be stored particular graphics files for background images at the appropriate corresponding resolution. When files are to be provided for download, then, the hierarchy may be traversed, and particular levels of sub-folders, which involve selecting the contents of one folder in distinction to other folders that are not applicable to the device, may have their contents skipped or selected for download, based on associations that have been previously made between the device types or particular device characteristics, and the capabilities of the requesting device.

Developers can also group file based on other types of parameters. For example, different versions of main binaries and supplemental files may be grouped according to different versions of an application, and the appropriate supplemental files for a particular version of a central binary may be mapped from the central binary in a number of ways. For example, the supplemental files may be organized by a developer into folders "under" the central binary, or the files may be stored in a non-hierchical manner but names for the files may be stored in a hierarchy under the central binary, and may be mapped to that binary using the organization (so that a single file can be reference by multiple different central binaries). And in yet another implementation, a single file (e.g., a simple text file) may be correlated to a main binary and the content of the file may define the supplemental files that are to be associated and downloaded with the binary. The names of files may also signal the binary to which they are to be associated, such as making "media" files with a v2.2.0 or v2.2.1 name portion or extension correspond to a central binary number v2.2. Such ability to organize files into groups and sub-groups that each have one or more files can enable a developer to more readily organize and edit the file structure for a package of files, and may also enable a user to more readily see the available files and choose which files they would like to obtain with a main binary.

Once the software publisher has finished inputting the information about the application version being uploaded, the publisher may click a save button 226 to complete the upload process. In some implementations, the software publisher may be allowed to complete the upload process, e.g., by clicking the save button 226, without choosing a particular device group. For example, the software publisher may upload one or more application files that are not intended for publication at the time of the upload, and therefore, the software publisher may choose not to select a device group to associate with the application. In some implementations, only the application versions that have been associated with one or more particular device groups are published for access by users on the application market system.

In the implementation shown, an application binary may be associated with up to two supplemental files that may take various forms and provide various functions. In some implementations, supplemental file may be used by software developers to package multiple application files into a single, signed file. In some mobile device platforms and other computing platforms, the supplemental file can be mounted as a file system for a particular device.

As described above, interface 202 may allow a software publisher to upload a supplemental file, and associate the supplemental files with a particular application or a particular version of an application. In cases where a newer version of an application is being uploaded to the publishing system, the software publisher may also associate previously uploaded supplemental files with the new version of the application. In some implementations, the supplemental files may be identified by a version code, which in some cases may match or be correlated to the version code of the application binary with which the supplemental files are to be associated.

In other implementations, such supplemental file may have its own versioning that is separate from the versioning for the main binary and/or for other supplemental files (or groups of supplemental files). For example, a particular resource may have multiple versions over time, with each being stored by a marketplace. A developer may then, when establishing an application with the marketplace, associate the main binary for the application with particular ones of the supplemental files, which may also include choosing which versions of those supplemental files to associate it with. For example, the developer may establish an association file that defines and identifies each of the supplemental files (either individually or in groups), including by version, that should be downloaded with the particular binary file. For example, the developer may identify that binary XYZ should be associated with file A v.15 and with file B v.17.

As one example of versioning, a software publisher may choose to publish a game, where the main application binary is version 100, and is 20MB. For various reasons, as described above, the software publisher may also choose to publish a 500MB supplemental file (e.g., to include graphics and/or audio assets for the game) as version 100. After the game has been published on the application market system, a user may choose to download the game. Upon initial download, the 20MB application binary may be stored in the application storage portion of the user's device, while the 500MB supplemental file may be stored in general storage (e.g., an SD card) of the device.

The software publisher may later decide to publish an update to the application binary (new version 101, which is also 20MB), and may also publish a supplemental file (version 101, which is 50MB). The user's device may notify the user of the update to the application, e.g., by way of an update notification or other appropriate signaling mechanism. If the user chooses to download the update, the marketplace client executing on the user's device may request download information from the application market system, which may return information that indicates the current version of the application includes an application binary (version 101, 20MB), a first supplemental file (version 100, 500MB), and a second supplemental file (version 101, 50MB).

In response to receiving the information about the current version of the application, the marketplace client may analyze the files stored on the device, and may determine that the first supplemental file (version 100, 500MB) is already present on the device. In some implementations, the marketplace client may perform further checks to ensure that the file is the correct file, such as by use of a checksum or by comparing the size of the first supplemental file stored on the device to the size of the first supplemental file that was indicated in the application information received from the application market system. If the marketplace client can determine that the first supplemental file stored on the device matches the first supplemental file that is associated with the current version of the application, then the marketplace client may only initiate download of the updated application binary (version 101, 20MB) and second supplemental file (version 101, 50MB). In this manner, the marketplace client only downloads the updated files (a total of 70MB), and spares the bandwidth (500MB in this example) and download times associated with downloading the first supplemental file again.

If a different user chooses to download the same game from the application market system, the marketplace client executing on the different user's device may determine that none of the current application files is present on the device, and may therefore initiate download of the application binary (version 101, 20MB), the first supplemental file (version 100, 500MB), and the second supplemental file (version 101, 50MB) for a total download size of 570MB.

In some implementations, when newer versions of the application files are downloaded, the marketplace client may delete or archive the older versions of the application files that are being replaced. For example, continuing with the example above, if the software publisher subsequently publishes a new application binary (version 102, 20MB) and a new second supplemental file (version 102, 30MB), the application market system may indicate to the marketplace client that the current versions of the application files include the new application binary, the first supplemental file (version 100, 500MB), and the new second supplemental file. When the user chooses to download the updated application files, the marketplace client may once again only download the updated files, e.g., by determining that the first supplemental file is already present on the device, and may remove or archive the old versions of the application files that are to be replaced. For example, the marketplace client may move the old versions of the files to a different storage location on the device so that they are available on the device if the user wishes to restore the previous version. Similarly, the marketplace client may leave the old versions of the files in the same storage location, but may rename the files to indicate that they are associated with an outdated version of the application.

In some cases, the software publisher may release a new version of the game that does not use any of the existing application files. In such cases, as described above, the application market system may provide information about the various application files to the marketplace client executing on the user's device, and the marketplace client may initiate download of all of the files after it determines that none of the application files are present on the device.

Although this application generally describes the supplemental files as having particular file types, such as media files, the supplemental files may take a variety of forms and may also be binaries or other sorts of files. In addition, although a main or central binary file has been described, to which are associated a number of supplemental files, the main or central file may take others forms, or there may be multiple main or central files, with supplemental files that relate to the main or central files in various ways. Also, as noted above, the various files that are downloaded may be grouped, packaged, or arranged in various convenient manners to permit the modular construction of a package, or group, of files that can be updated and changed, such as on a per-file basis (e.g., to swap out an old file with a new file, without affecting the other files). Instead the systems and techniques described here may be used to distribute any appropriate files or file types by way of an application market system.

FIG. 3 is a system diagram of a software distribution system 300 for distributing application files associated with a software application. In general, the system centers around an application marketplace to which developers can post applications for distribution and users of computing devices may have such applications downloaded to their devices. The system 300 may be implemented similar to the system 100 pictured and described with respect to FIG. 1, though additional detail about particular structural components of the system are shown here.

In this example, the system 300 comprises three major components: a marketplace server system 330, a marketplace client 320, and application files 310. The marketplace server system 330 may be part of a system that provides a variety of hosted services through the Internet, and in particular may present an application marketplace to the public. Such a marketplace may be presented as a virtual storefront that carries applications from a variety of developers and also collects money for applications that are sold through the marketplace (e.g., by charging identified credit card accounts of users), and remits a portion of such payments to developers of corresponding purchased applications.

An application manager 332 in the server system 330 may be responsible for controlling the manner in which applications slated for download to the marketplace client 320 are managed. Specifically, the application manager 332 may track correspondence between application binaries files and corresponding supplemental files that are associated with the application, and are to be downloaded to devices that download the associated application binary.

A signature generator 334 provides signatures for particular application files based on analyzing portions of the application files. The marketplace client 320 in turn includes a file verifier 328 to verify the file signature before initiating installation of the application files. The marketplace server system 330 may also send, to the marketplace client 320, information about the portions of the application files that were analyzed by the marketplace server system 330, and the marketplace client 320 may in turn verify the file signature by generating a verification signature for the application files based on analyzing the portions of the application files that were analyzed by the marketplace server system 330, and comparing the file signature to the verification signature. Such application file information and additional information may also be provided from the marketplace server system 330 to the marketplace client 320 in response to an application request from the marketplace client 320.

Other components on the marketplace client may also be used to help manage the download of application components from the marketplace server system 33 to the marketplace client 320. For example, a user interface 322 may present the general application marketplace to a user, so that the user may search for and select applications in a familiar manner. In certain instances, the device type of a user's device may be obtained or determined, so that the marketplace only shows the user applications that are compatible with the particular device type.

The user interface may also generate information for a user to understand the progress of downloads of applications binaries and related files to the a client device as managed by the application client 320.

The application manager 324 may act as the counterpart to application manager 332 on marketplace server system 330. In particular, the two managers 332 may communicate and coordinate the download of multiple files that are related to a particular application, such as one or more application binaries, and one or more supplemental files. As one example, the user interface 322 may also show progress bars or other progress indicators so that a user of a device may see how much progress has been made in downloaded all the multiple files for an application. For example, a single progress bar may show the in toto progress of the download of multiple files for a particular application. The bar may be made to change colors for each particular file as it goes, and text adjacent to the bar may indicate a description of the file currently being downloaded. In other instances, a master bar may be shown in a first row of a display, and sub-bars for particular components may be shown below the master bar. For example, each of the sub-bars may initially be empty, and may fill up one-by-one, as the master bar also fills up, but does not show completely full until all of the sub-bars are also full.

In certain examples, the user interface 322 may provide an alert to a user to indicate that certain supplemental files will not be downloaded immediately with the corresponding application binary, such as because the user is currently on a cellular data network that may charge extra for the extra bandwidth that is used. The user may then confirm that they would like the files immediately or would prefer to wait until the device connects to a lower cost network, such as their work or home WiFi network.

A local file manager 326 managers the storage and updating of application files 310, which may be stored on a tangible recordable medium on the client device. Such files may include application binaries 312, which are the core binary files for particular applications that have been downloaded from the application marketplace to the client device. The files may also include supplemental binaries 313, which may be, for example, content that may be accessed by an application (e.g., images, video files, templates, and the like) but that may be downloaded separately from the corresponding application binaries 312, and at a different time than the download of the application binaries 312. Patch binaries 314 may correspond to patches that are issued by an developer after an application is launched, and may, for example, be implemented to correct bugs or errors in the launched code.

The local file manager 326 may be responsible for saving, maintaining, and organizing the application files 310. For example, the local file manager 326 may receive the application files 310 from the server system 330 and cause it to be associated with a particular application and stored in a particular location. For example, updating files may be stored in tandem with existing files, until the update has been completed, and then the existing files may be deleted. In addition, the local file manager 326 may initiate installation of the application files 310 after the download of the particular ones of the application files is complete. In addition, the local file manager 326 may compare version information to respective versions of the stored files to determine whether to download particular ones of the application files, and may respond to requests from the server system 330 in order to cause previous versions of stored files to be deleted after downloading newer versions of the stored files. In order to determine what files are on the device, the local file manager 326 may identify the stored files by analyzing files stored in a directory on the computing device that corresponds to the particular software application.

In this manner then, the system 300 provides adequate structural components, which can be implemented in a combination of software and hardware, to enable the partial downloading of application-related files, with a main binary being downloaded initially to provide basic functionality, and supplemental files being downloaded later to provide full (but optional) functionality. Also, updates and other application management techniques may be implemented with such a system, such as in the manners discussed above and below.

A developer may also establish the presentation of its application for download so that users are given the option to download some files but not others (where the developer can identify in advance which files are optional and which are required in order for users to implement the application, and which are required to implement particular pieces of functionality).

Moreover, in certain instances, the application may itself interact directly with a marketplace server system (not through a dedicated market client) to obtain necessary supplemental files, via an application programming interface (API) published by the marketplace operator. As described above in certain examples, the market client may tell the marketplace server system what to download and may determine where it is to be placed. In certain instances, however, the market client may attempt a download, and if it fails, the application itself may attempt to initiate and manage the download. Although the developer will have to support the client-side operations in such a situation, it will at least be able to avoid having to support server-side operations. Such interaction (including the ability of an application to ask a marketplace whether the user or device possessing the application is a rightful possessor of the application, so that the application may disable its own functionality) is explained more fully in co-pending U.S. Application Serial No. 13/111,877, titled "Electronic License Management" and filed May 19, 2011. As one example, the application, when it is first launched, may access the API to obtain URLs or other pointers to the relevant supplemental files that the marketplace determines it needs (and the marketplace may have provided the developer with sample code that can be easily integrated into the application to provide this functionality). The marketplace servers may host those files, which those servers may then provide when the relevant application causes a computing device on which it is running to provide the appropriate credentials for obtaining the files, according to the predefined API.

In yet other or additional features, the publisher can also provide some or all supplemental files for download from a location other than the marketplace server system. For example, a marketplace client may provide an API to the application so as to provide the application with one or more supplemental file names and locations for the files, as part of the installation process, and the application may use such pointer information to initiate the download of those supplemental files itself. In such an implementation, some or all of the files may be hosted and served by the marketplace servers, and some of the files may be hosted and served from another location. For example, a developer can depend on a marketplace to serve large but relatively static files, but may itself serve smaller files that change frequently. [I added this extra idea to be something similar to what you are doing but still different. In case a third party ultimately does this, we will be able to cover it.]

In certain instances, the ability of a copy of an application to obtain supplemental files (for itself) may be blocked if the application does not properly authenticate itself-e.g., if the application was not downloaded from an appropriate marketplace or is a copy of a downloaded application. For example, the URLs that are provided to a marketplace client or to an application and that point to resources can be non-reusable or may have short expiration dates. A stamp and a signature for an application that is downloaded, where the signature can be included in a URL that a device provides to marketplace servers, and the presence of the signature may be used by the marketplace servers as a mechanism to determine that the files should be downloaded to the relevant computing device. The signature may include a hashed version of any single one of, or combination of, the user ID, device ID, and application ID (or other similar information that can provide the same security and identification) so that the original data cannot be reverse engineered by a dishonest user and reused. In these manners, then, additional security may be provided to developers to prevent piracy, while still maintaining a relatively easy experience for users with respect to an application marketplace.

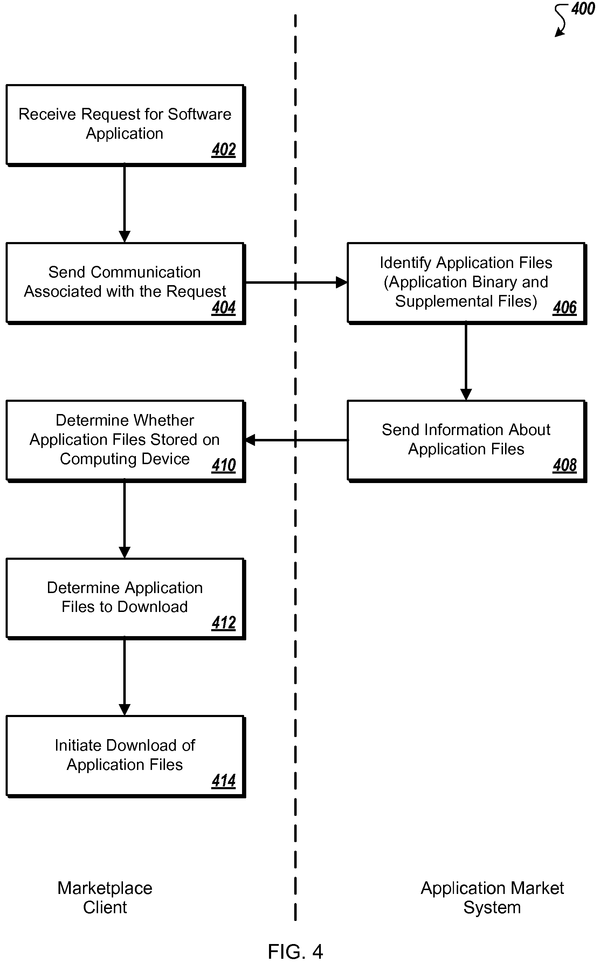

FIG. 4 is a swim-lane diagram of an example process 400 for distributing application files associated with a software application. Process 400 may be implemented, for example, by the marketplace client 120 operating on device 110 and application market system 108 of FIG. 1. For clarity of presentation, the description that follows uses these systems as the basis for describing process 400. However, other systems, or combination of systems, may also or alternatively be used to perform the process.

Process 400 begins when the marketplace client receives a request for a software application (402). The request may be associated with a new download of the software application, or with an update to the software application that is already present on a computing device. As an example of a new download, a user may browse or search for an application available through an application market system using the marketplace client executing on the user's device, and may request download of a particular application that the user finds interesting. As an example of an update request, a publisher of an application may publish updates to the application, and the marketplace client may provide a notification of such updates for display on the device. The user may then request download of the updated application files for installation on the device. In turn, the marketplace client may send a communication associated with the request to the application market system (404).

Upon receipt of the communication, the application market system may identify the application files, including the appropriate versions of the application binary and any supplemental files, that are responsive to the communication (406). For example, the application market system may identify the most recent versions of each of the application files that are responsive to the communication. As another example, certain application files may be associated with particular requesting devices or particular types of requesting devices. In such cases, the application market system may identify the appropriate version of the application files for the particular device or type of device that submitted the request for the application.

In addition to identifying the appropriate versions of the application files, the application market system may also determine certain information associated with the application files. For example, the application market system may determine certain metadata, such as the file size, version information, and/or other information that may allow the marketplace client to determine which of the application files to download. Upon gathering such information, the application market system may send the information to the marketplace client (408).

The marketplace client may then use the information to determine whether any of the application files are already stored on the computing device (410). For example, the marketplace client may compare the name, version, and/or size metadata information to information associated with certain application files that are already stored on the device to see if the information matches. Such comparisons may then be used to determine which of the application files to download (412). For example, if the marketplace client determines that one or more of the application files is already stored on the computing device, then the marketplace client may not download those particular application files. On the other hand, if any of the application files is not present on the device, or if an older version of the file is present, or if the size of the file does not match the size information received from the application market system, then the marketplace client may determine that the application file should be downloaded, and may subsequently initiate the download (414).

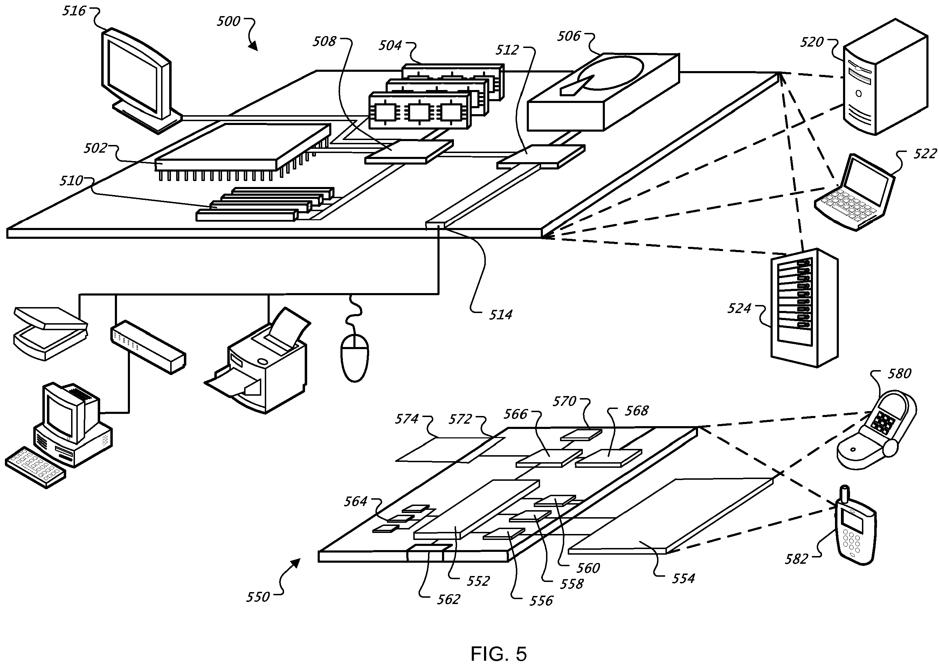

FIG. 5 shows an example of a computing device 500 and a mobile computing device 550 that can be used to implement the techniques described here. Computing device 500 is intended to represent various forms of digital computers, such as laptops, desktops, workstations, personal digital assistants, servers, blade servers, mainframes, and other appropriate computers. Computing device 550 is intended to represent various forms of mobile devices, such as personal digital assistants, cellular telephones, smartphones, and other similar computing devices. The components shown here, their connections and relationships, and their functions, are meant to be exemplary only, and are not meant to limit implementations described and/or claimed in this document.

Computing device 500 includes a processor 502, memory 504, a storage device 506, a high-speed interface 508 connecting to memory 504 and high-speed expansion ports 510, and a low speed interface 512 connecting to low speed bus 514 and storage device 506. Each of the components 502, 504, 506, 508, 510, and 512, are interconnected using various busses, and may be mounted on a common motherboard or in other manners as appropriate. The processor 502 can process instructions for execution within the computing device 500, including instructions stored in the memory 504 or on the storage device 506 to display graphical information for a GUI on an external input/output device, such as display 516 coupled to high speed interface 508. In other implementations, multiple processors and/or multiple busses may be used, as appropriate, along with multiple memories and types of memory. Also, multiple computing devices 500 may be connected, with each device providing portions of the necessary operations (e.g., as a server bank, a group of blade servers, or a multi-processor system).

The memory 504 stores information within the computing device 500. In one implementation, the memory 504 is a volatile memory unit or units. In another implementation, the memory 504 is a non-volatile memory unit or units. The memory 504 may also be another form of computer-readable medium, such as a magnetic or optical disk.

The storage device 506 is capable of providing mass storage for the computing device 500. In one implementation, the storage device 506 may be or contain a computer-readable medium, such as a floppy disk device, a hard disk device, an optical disk device, a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 504, the storage device 506, or memory on processor 502.

The high-speed controller 508 manages bandwidth-intensive operations for the computing device 500, while the low speed controller 512 manages lower bandwidth-intensive operations. Such allocation of functions is exemplary only. In one implementation, the high-speed controller 508 is coupled to memory 504, display 516 (e.g., through a graphics processor or accelerator), and to high-speed expansion ports 510, which may accept various expansion cards (not shown). In the implementation, low-speed controller 512 is coupled to storage device 506 and low-speed expansion port 514. The low-speed expansion port, which may include various communication ports (e.g., USB, Bluetooth, Ethernet, wireless Ethernet), may be coupled to one or more input/output devices, such as a keyboard, a pointing device, a scanner, or a networking device such as a switch or router, e.g., through a network adapter.

The computing device 500 may be implemented in a number of different forms, as shown in the figure. For example, it may be implemented as a standard server 520, or multiple times in a group of such servers. It may also be implemented as part of a rack server system 524. In addition, it may be implemented in a personal computer such as a laptop computer 522. Alternatively, components from computing device 500 may be combined with other components in a mobile device (not shown), such as device 550. Each of such devices may contain one or more of computing device 500, 550, and an entire system may be made up of multiple computing devices 500, 550 communicating with each other.

Computing device 550 includes a processor 552, memory 564, an input/output device such as a display 554, a communication interface 566, and a transceiver 568, among other components. The device 550 may also be provided with a storage device, such as a microdrive or other device, to provide additional storage. Each of the components 550, 552, 564, 554, 566, and 568, are interconnected using various busses, and several of the components may be mounted on a common motherboard or in other manners as appropriate.

The processor 552 can execute instructions within the computing device 550, including instructions stored in the memory 564. The processor may be implemented as a chipset of chips that include separate and multiple analog and digital processors. The processor may provide, for example, for coordination of the other components of the device 550, such as control of user interfaces, applications run by device 550, and wireless communication by device 550.

Processor 552 may communicate with a user through control interface 558 and display interface 556 coupled to a display 554. The display 554 may be, for example, a TFT LCD (Thin-Film-Transistor Liquid Crystal Display) or an OLED (Organic Light Emitting Diode) display, or other appropriate display technology. The display interface 556 may comprise appropriate circuitry for driving the display 554 to present graphical and other information to a user. The control interface 558 may receive commands from a user and convert them for submission to the processor 552. In addition, an external interface 562 may be provided in communication with processor 552, so as to enable near area communication of device 550 with other devices. External interface 562 may provide, for example, for wired communication in some implementations, or for wireless communication in other implementations, and multiple interfaces may also be used.

The memory 564 stores information within the computing device 550. The memory 564 can be implemented as one or more of a computer-readable medium or media, a volatile memory unit or units, or a non-volatile memory unit or units. Expansion memory 574 may also be provided and connected to device 550 through expansion interface 572, which may include, for example, a SIMM (Single In Line Memory Module) card interface. Such expansion memory 574 may provide extra storage space for device 550, or may also store applications or other information for device 550. Specifically, expansion memory 574 may include instructions to carry out or supplement the processes described above, and may include secure information also. Thus, for example, expansion memory 574 may be provide as a security module for device 550, and may be programmed with instructions that permit secure use of device 550. In addition, secure applications may be provided via the SIMM cards, along with additional information, such as placing identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 564, expansion memory 574, or memory on processor 552.

Device 550 may communicate wirelessly through communication interface 566, which may include digital signal processing circuitry where necessary. Communication interface 566 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 568. In addition, short-range communication may occur, such as using a Bluetooth, Wi-Fi, or other such transceiver (not shown). In addition, GPS (Global Positioning System) receiver module 570 may provide additional navigation- and location-related wireless data to device 550, which may be used as appropriate by applications running on device 550.

Device 550 may also communicate audibly using audio codec 560, which may receive spoken information from a user and convert it to usable digital information. Audio codec 560 may likewise generate audible sound for a user, such as through a speaker, e.g., in a handset of device 550. Such sound may include sound from voice telephone calls, may include recorded sound (e.g., voice messages, music files, etc.) and may also include sound generated by applications operating on device 550.

The computing device 550 may be implemented in a number of different forms, as shown in the figure. For example, it may be implemented as a cellular telephone 580. It may also be implemented as part of a smartphone 582, personal digital assistant, or other similar mobile device.

Additionally computing device 500 or 550 can include Universal Serial Bus (USB) flash drives. The USB flash drives may store operating systems and other applications. The USB flash drives can include input/output components, such as a wireless transmitter or USB connector that may be inserted into a USB port of another computing device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing system that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing system can include clients and servers. A client and server are generally remote from each other and typically interact through a communication network. The relationship of client and server arises by virtue of computer programs running on the respective computers and having a client-server relationship to each other.

Although a few implementations have been described in detail above, other modifications are possible. Moreover, other mechanisms for performing the systems and methods described in this document may be used. In addition, the logic flows depicted in the figures may not require the particular order shown, or sequential order, to achieve desirable results. Other steps may be provided, or steps may be eliminated, from the described flows, and other components may be added to, or removed from, the described systems. Accordingly, other implementations are within the scope of the following claims.

## Claims

1. A computer-implemented system for distributing application files to a computing device from an online application marketplace, wherein the online application marketplace provides a platform for software developers to submit applications to be published in the online application marketplace, and the online application marketplace provides an interface that allows users to browse, search for, and purchase the published applications, the system comprising:
a server system interface arranged to receive, from a client application (320) of one of a plurality of client computing devices, a communication that corresponds to a request to obtain or update a software application for the one of the plurality of client computing devices; and
an application marketplace server system programmed to:
identify (406), in response to the communication, application files that include (a) a particular version of an executable application binary file that corresponds to the software application and (b) a particular version of one or more supplemental files that includes graphics, audio, or multimedia assets associated with the software application and that is accessed by the software application, wherein a plurality of versions of the supplemental files for the software application are targeted to respective device groups based, at least in part, on one or more of: device screen size and device graphics processing capacity, wherein the application marketplace server system is programmed to perform the following operations to identify the particular version of the supplemental files for the one of the plurality of client computing devices: determine a particular device group to which the one of the plurality of client computing device belongs based on one or more of: the one of the plurality of client computing devices' screen size and the one of the plurality of client computing devices' graphics processor, and identify, from among the plurality of versions of the supplemental files, the particular version of the supplemental files for the one of the plurality of client computing devices based on the particular device group for the one of the plurality of client computing devices;
send (408) information that relates to the application files to the client application in response to receiving the communication,
identify stored files (310) on the one of the plurality of computing devices that correspond to the application files, determine particular ones of the application files to download based on the identified stored files and the information that relates to the application files sent from the application marketplace server system (330), and initiate download of the particular ones of the application files,
wherein determining the particular ones of the application files to download comprises determining the particular version of the executable application binary file to be downloaded, and determining a set of the particular version of the more or more supplemental files that are not to be downloaded.

2. The system of claim 1, wherein the client application is programmed to remove previous versions of the stored files from the one of the plurality of client computing devices after downloading newer versions of the stored files.

3. The system of any one of the preceding claims, wherein the client application comprises an application marketplace client that corresponds to the application marketplace server system and is programmed to download files for a plurality of different applications from the application marketplace server system.

4. The system of claim 1, wherein the application marketplace server system is programmed to limit the application binary file to a defined maximum size, and wherein an aggregate size of the particular ones of the application files exceeds the maximum size of the application binary file.

5. The system of claim 1, wherein the client application is programmed to identify the stored files by analyzing files stored in a directory on the one of the plurality of client computing devices that corresponds to the software application.

6. The system of claim 1, wherein the application marketplace server system is programmed to generate a file signature for the application files based on analyzing portions of the application files, and wherein the client application is programmed to verify the file signature before initiating installation of the application files.

7. The system of claim 6, wherein the application marketplace server system is programmed to send, to the client application, information about the portions of the application files that were analyzed by the application marketplace server system, and the client application is programmed to verify the file signature by generating a verification signature for the application files based on analyzing the portions of the application files that were analyzed by the marketplace server system, and comparing the file signature to the verification signature.

8. The system of claim 1, wherein the information that relates to the application files comprises size information for particular ones of the application files, and wherein the client application is programmed to display an indicator of progress of the download of the particular ones of the application files, the indicator showing a ratio of an amount downloaded to an aggregate size of the particular ones of the application files.

9. The system of claim 1, wherein the client application is programmed to initiate installation of the application files after the download of the particular ones of the application files is complete.

10. The system of claim 1, wherein the client application is programmed to initiate installation of the application files after the download of the particular ones of the application files is complete.

11. The system of claim 1, wherein the application marketplace server system is programmed to download files in response to verified requests from
(a) an application marketplace application that that corresponds to the application marketplace server system and is programmed to download files for a plurality of different applications from the application marketplace server system; and
(b) particular applications requesting the downloaded files for their own use.

12. A computer-implemented method for determining application files for download to a computing device, the method comprising:
receiving (402), with an application marketplace client (320), executing on one of a plurality of client computing devices, a request to obtain or update a software application that comprises a plurality of application files and that is configured to execute on the one of the plurality of client computing devices, wherein the application files include (a) a particular version of an executable application binary file that corresponds to the software application and (b) a particular version of one or more supplemental files that (i) includes graphics, audio, or multimedia assets associated with the software application and (ii) is accessed by the software application, wherein there are a plurality of versions of the supplemental files that are targeted to respective device groups based, at least in part, on one or more of: device screen size and device graphics processing capacity;
receiving, with the application marketplace client (320) and from an application marketplace server system (330) that operates remotely from the one of the plurality of client computing devices, information that relates to the application files, wherein the information identifies a particular version of the supplemental files for the one of the plurality of client computing devices, the particular version of the supplemental files being selected from among the plurality of versions of the supplemental files based on (a) a determination that the one of the plurality of client computing devices belongs to a particular device group based on one or more of: the computing device's screen size and the computing device's graphics processor, and (b) a selection of the particular version of the supplemental files from among the plurality of versions of the supplemental files based on the particular device group to which the one of the plurality of client computing devices belongs;
identifying (410) stored files on the one of the plurality of client computing devices that correspond to the application files;
determining (412) particular ones of the application files to download based on the identified stored files and the received information that relates to the application files, wherein the particular version of the executable application binary file is determined to be downloaded, and a set of the particular version of the one or more supplemental files are determined not to be downloaded; and
initiating (414) download of the determined particular ones of the application files.

13. The method of claim 12, further comprising identifying a failure by the application marketplace client to download one or more files, and instituting download of the one or more files from the marketplace server system by an application that is programmed to use the one or more files after the one or more files are downloaded.

## Patentansprüche

1. Computerimplementiertes System zum Verteilen von Anwendungsdateien an ein Computergerät von einem Online-Anwendungsmarktplatz, wobei der Online-Anwendungsmarktplatz eine Plattform für Softwareentwickler zum Einreichen von Anwendungen bereitstellt, die auf dem Online-Anwendungsmarktplatz veröffentlicht werden sollen, und der Online-Anwendungsmarktplatz eine Schnittstelle bereitstellt, die es Benutzern ermöglicht, die veröffentlichten Anwendungen zu durchstöbern, zu durchsuchen und zu kaufen, wobei das System Folgendes umfasst:
Server-Systemschnittstelle, die angeordnet ist, um von einer Client-Anwendung (320) eines von einer Vielzahl von Client-Computergeräten eine Kommunikation zu empfangen, die einer Anforderung entspricht, eine Software-Anwendung für das eine der Vielzahl von Client-Computergeräten zu erhalten oder zu aktualisieren; und
Anwendungsmarktplatz-Serversystem, programmiert für Folgendes:
Identifizieren (406), in Reaktion auf die Kommunikation, von Anwendungsdateien, die (a) eine bestimmte Version einer ausführbaren binären Anwendungsdatei, die der Softwareanwendung entspricht, und (b) eine bestimmte Version einer oder mehrerer Zusatzdateien beinhalten, die der Softwareanwendung zugeordnete Grafik-, Audio- oder Multimediakomponenten beinhaltet und auf die von der Softwareanwendung zugegriffen wird, wobei eine Vielzahl von Versionen der Zusatzdateien für die Softwareanwendung auf entsprechende Vorrichtungsgruppen ausgerichtet sind, die zumindest teilweise auf einem oder mehreren davon basieren: Bildschirmgröße der Vorrichtung und Grafikverarbeitungskapazität der Vorrichtung, wobei das Anwendungsmarktplatz-Serversystem so programmiert ist, dass es die folgenden Operationen durchführt, um die bestimmte Version der Zusatzdateien für das eine der Vielzahl von Client-Computergeräten zu identifizieren:
Ermitteln einer bestimmten Vorrichtungsgruppe, zu der das eine der Vielzahl von Client-Computergeräten gehört, basierend auf einer oder mehreren von: Bildschirmgrößen des einen der Vielzahl von Client-Computergeräten und dem Grafikprozessor des einen der Vielzahl von Client-Computergeräten, und Identifizieren, aus der Vielzahl der Versionen der Zusatzdateien, der bestimmten Version der Zusatzdateien für das eine der Vielzahl von Client-Computergeräten, basierend auf der bestimmten Vorrichtungsgruppe für das eine der Vielzahl von Client-Computergeräten;
Senden (408) von Informationen, die sich auf die Anwendungsdateien beziehen, an die Client-Anwendung in Reaktion auf den Empfang der Kommunikation,
Identifizieren der gespeicherten Dateien (310) auf einem aus einer Vielzahl von Computergeräten, das den Anwendungsdateien entspricht, Ermitteln bestimmter der herunterzuladenden Anwendungsdateien basierend auf den identifizierten gespeicherten Dateien und den Informationen, die sich auf die vom Serversystem des Anwendungsmarktplatzes (330) gesendeten Anwendungsdateien beziehen, und Initiierung des Herunterladens der bestimmten der Anwendungsdateien,
wobei das Ermitteln der bestimmten der herunterzuladenden Anwendungsdateien das Ermitteln der bestimmten Version der herunterzuladenden ausführbaren binären Anwendungsdatei und das Ermitteln eines Satzes der bestimmten Version der mehr oder mehr zusätzlichen Dateien, die nicht heruntergeladen werden sollen, umfasst.

2. System nach Anspruch 1, wobei die Client-Anwendung so programmiert ist, dass diese nach dem Herunterladen neuerer Versionen der gespeicherten Dateien frühere Versionen der gespeicherten Dateien von einem der Vielzahl von Client-Computergeräten entfernt.

3. System nach einem der vorhergehenden Ansprüche, wobei die Client-Anwendung einen Anwendungsmarktplatz-Client umfasst, der dem Anwendungsmarktplatz-Serversystem entspricht und so programmiert ist, dass dieser Dateien für eine Vielzahl von verschiedenen Anwendungen vom Anwendungsmarktplatz-Serversystem herunterlädt.

4. System nach Anspruch 1, wobei das Anwendungsmarktplatz-Serversystem so programmiert ist, dass es die binäre Anwendungsdatei auf eine definierte maximale Größe begrenzt, und wobei eine Gesamtgröße der bestimmten der Anwendungsdateien die maximale Größe der binären Anwendungsdatei überschreitet.

5. System nach Anspruch 1, wobei die Client-Anwendung so programmiert ist, dass diese die gespeicherten Dateien identifiziert, indem sie Dateien analysiert, die in einem Verzeichnis auf dem einen der Vielzahl von Client-Computergeräten gespeichert sind, das der Software-Anwendung entspricht.

6. System nach Anspruch 1, wobei das Anwendungsmarktplatz-Serversystem so programmiert ist, dass es eine Dateisignatur für die Anwendungsdateien basierend auf der Analyse von Teilen der Anwendungsdateien erzeugt, und wobei die Client-Anwendung so programmiert ist, dass diese die Dateisignatur verifiziert, bevor sie die Installation der Anwendungsdateien initiiert.

7. System nach Anspruch 6, wobei das Anwendungsmarktplatz-Serversystem so programmiert ist, dass dieses Informationen über die Teile der Anwendungsdateien, die vom Anwendungsmarktplatz-Serversystem analysiert wurden, an die Client-Anwendung sendet, und die Client-Anwendung so programmiert ist, dass diese die Dateisignatur verifiziert, indem sie eine Verifizierungssignatur für die Anwendungsdateien basierend auf der Analyse der Teile der Anwendungsdateien, die vom Anwendungsmarktplatz-Serversystem analysiert wurden, erzeugt und die Dateisignatur mit der Verifizierungssignatur vergleicht.

8. System nach Anspruch 1, wobei die Informationen, die sich auf die Anwendungsdateien beziehen, Größeninformationen für bestimmte der Anwendungsdateien umfassen, und wobei die Client-Anwendung so programmiert ist, dass diese eine Indikation für den Fortschritt des Herunterladens der bestimmten der Anwendungsdateien anzeigt, wobei die Indikation ein Verhältnis einer heruntergeladenen Größe zu einer Gesamtgröße der bestimmten der Anwendungsdateien anzeigt.

9. System nach Anspruch 1, wobei die Client-Anwendung programmiert ist, um die Installation der Anwendungsdateien zu initiieren, nachdem das Herunterladen der bestimmten der Anwendungsdateien abgeschlossen ist.

10. System nach Anspruch 1, wobei die Client-Anwendung programmiert ist, um die Installation der Anwendungsdateien zu initiieren, nachdem das Herunterladen der bestimmten der Anwendungsdateien abgeschlossen ist.

11. System nach Anspruch 1, wobei das Anwendungsmarktplatz-Serversystem so programmiert ist, dass dieses Dateien in Reaktion auf verifizierte Anfragen von
(a) einer Anwendung des Anwendungsmarktplatzes, die dem Anwendungsmarktplatz-Serversystem entspricht, herunterlädt, und so programmiert ist, dass diese Dateien für eine Vielzahl von verschiedenen Anwendungen vom Anwendungsmarktplatz-Serversystem herunterlädt; und
(b) bestimmten Anwendungen, die die heruntergeladenen Dateien für deren eigene Zwecke anfordern, herunterlädt.

12. Computerimplementiertes Verfahren zum Ermitteln von Anwendungsdateien zum Herunterladen auf ein Computergerät, wobei das Verfahren Folgendes umfasst:
Empfangen (402), mit einem Anwendungsmarktplatz-Client (320), der auf einem aus einer Vielzahl von Client-Computergeräten ausgeführten einen Anforderung zum Erhalten oder Aktualisieren einer Softwareanwendung, die eine Vielzahl von Anwendungsdateien umfasst und die so konfiguriert ist, dass diese auf dem einen aus der Vielzahl von Client-Computergeräten ausgeführt wird, wobei die Anwendungsdateien (a) eine bestimmte Version einer ausführbaren binären Anwendungsdatei, die der Softwareanwendung entspricht, und (b) eine bestimmte Version einer oder mehrerer Zusatzdateien, enthalten, die (i) Grafiken, Audio- oder Multimediakomponenten beinhaltet, die mit der Softwareanwendung assoziiert sind, und (ii) auf die von der Softwareanwendung zugegriffen wird, wobei eine Vielzahl von Versionen der Zusatzdateien vorhanden sind, die auf entsprechende Vorrichtungsgruppen ausgerichtet sind und zumindest teilweise auf einer oder mehreren der folgenden basieren: Bildschirmgröße der Vorrichtung und Grafikverarbeitungskapazität der Vorrichtung;
Empfangen, mit dem Anwendungsmarktplatz-Client (320) und von einem Anwendungsmarktplatz-Serversystem (330), das entfernt von dem einen der Vielzahl von Client-Computergeräten arbeitet, von Informationen, die sich auf die Anwendungsdateien beziehen, wobei die Informationen eine bestimmte Version der Zusatzdateien für das eine der Vielzahl von Client-Computergeräten identifizieren, wobei die bestimmte Version der Zusatzdateien aus der Vielzahl von Versionen der Zusatzdateien ausgewählt wird, basierend auf
(a) einer Ermittlung, ob das eine der Vielzahl von Client-Computergeräten zu einer bestimmten Vorrichtungsgruppe gehört, basierend auf einer oder mehreren von: Bildschirmgröße des Computergeräts und Grafikprozessor des Computergeräts, und
(b) einer Auswahl der bestimmten Version der Zusatzdateien aus der Vielzahl von Versionen der Zusatzdateien basierend auf der bestimmten Vorrichtungsgruppe, zu der das eine der Vielzahl von Client-Computergeräten gehört;
Identifizieren (410) der auf einem der Vielzahl von Client-Computergeräten gespeicherten Dateien, die den Anwendungsdateien entsprechen;
Ermitteln (412) der bestimmten herunterzuladenden Anwendungsdateien basierend auf den identifizierten gespeicherten Dateien und den empfangenen Informationen, die sich auf die Anwendungsdateien beziehen, wobei ermittelt wird, dass die bestimmte Version der ausführbaren binären Anwendungsdatei herunterzuladen ist, und ermittelt wird, dass ein Satz der bestimmten Version der einen oder mehreren Zusatzdateien nicht herunterzuladen ist; und
Initiieren (414) des Herunterladens der ermittelten bestimmten der Anwendungsdateien.

13. Verfahren nach Anspruch 12, ferner umfassend das Identifizieren eines Fehlschlagens des Anwendungsmarktplatz-Clients, eine oder mehrere Dateien herunterzuladen, und das Initiieren des Herunterladens der einen oder mehreren Dateien vom Anwendungsmarktplatz-Serversystem durch eine Anwendung, die so programmiert ist, dass diese die eine oder mehreren Dateien verwendet, nachdem die eine oder mehreren Dateien heruntergeladen wurden.

## Revendications

1. Système mis en œuvre par ordinateur destiné à distribuer des fichiers d'application à un dispositif informatique à partir d'un marché d'applications en ligne, dans lequel le marché d'applications en ligne fournit une plateforme pour que des développeurs de logiciels soumettent des applications à publier sur le marché d'applications en ligne, et le marché d'applications en ligne fournit une interface qui permet aux utilisateurs de parcourir, rechercher et acheter les applications publiées, le système comprenant :
une interface de système serveur agencée pour recevoir, à partir d'une application cliente (320) de l'un d'une pluralité de dispositifs informatiques clients, une communication qui correspond à une demande d'obtention ou de mise à jour d'une application logicielle pour l'un de la pluralité de dispositifs informatiques clients ; et
un système de serveur de marché d'applications programmé pour :
identifier (406), en réponse à la communication, de fichiers d'application incluant (a) une version particulière d'un fichier binaire d'application exécutable qui correspond à l'application logicielle et (b) une version particulière d'un ou plusieurs fichiers supplémentaires qui inclut des actifs graphiques, audio ou multimédias associés à l'application logicielle et qui est accessible par l'application logicielle, dans lequel une pluralité de versions de fichiers supplémentaires de l'application logicielle sont ciblées pour des groupes de dispositifs respectifs, sur la base, au moins en partie, d'un ou plusieurs parmi : une taille d'écran et une capacité de traitement graphique de dispositif, dans lequel le système de serveur de marché d'applications est programmé pour réaliser les opérations suivantes afin d'identifier la version particulière des fichiers supplémentaires pour l'un de la pluralité de dispositifs informatiques clients :
la détermination d'un groupe de dispositifs particulier auquel l'un de la pluralité de dispositifs informatiques client appartient sur la base d'un ou plusieurs parmi : la taille d'écran de l'un de la pluralité de dispositifs informatiques clients et le processeur graphique de l'un de la pluralité de dispositifs informatiques clients, et l'identification, à partir de la pluralité de versions des fichiers supplémentaires, de la version particulière des fichiers supplémentaires pour l'un de la pluralité de dispositifs informatiques clients sur la base du groupe de dispositifs particulier pour l'un de la pluralité de dispositifs informatiques clients ;
l'envoi (408) d'informations relatives aux fichiers d'application à l'application cliente en réponse à la réception de la communication,
l'identification de fichiers stockés (310) sur l'un de la pluralité de dispositifs informatiques qui correspondent aux fichiers d'application, la détermination de fichiers particuliers des fichiers d'application à télécharger sur la base des fichiers stockés identifiés et des informations relatives aux fichiers d'application envoyés depuis le système de serveur de marché d'applications (330), et le lancement du téléchargement des fichiers particuliers des fichiers d'application, dans lequel la détermination des fichiers particuliers des fichiers d'application à télécharger comprend la détermination de la version particulière du fichier binaire d'application exécutable à télécharger, et la détermination d'un ensemble de la version particulière de l'ensemble des un ou plusieurs fichiers supplémentaires qui ne doivent pas être téléchargés.

2. Système selon la revendication 1, dans lequel l'application client est programmée pour supprimer des versions précédentes des fichiers stockés à partir de l'un de la pluralité de dispositifs informatiques clients après avoir téléchargé des versions plus récentes des fichiers stockés.

3. Système selon l'une quelconque des revendications précédentes, dans lequel l'application client comprend un client de marché d'applications qui correspond au système de serveur de marché d'applications et est programmé pour télécharger des fichiers pour une pluralité d'applications différentes à partir du système de serveur de marché d'applications.

4. Système selon la revendication 1, dans lequel le système de serveur de marché d'applications est programmé pour limiter le fichier binaire d'application à une taille maximale définie, et dans lequel une taille agrégée des fichiers particuliers des fichiers d'application dépasse la taille maximale du fichier binaire d'application.

5. Système selon la revendication 1, dans lequel l'application client est programmée pour identifier les fichiers stockés en analysant des fichiers stockés dans un répertoire sur l'un de la pluralité de dispositifs informatiques clients qui correspond à l'application logicielle.

6. Système selon la revendication 1, dans lequel le système de serveur de marché d'applications est programmé pour générer une signature de fichier pour les fichiers d'application sur la base de l'analyse de portions des fichiers d'application, et dans lequel l'application client est programmée pour vérifier la signature du fichier avant le lancement de l'installation des fichiers d'application.

7. Système selon la revendication 6, dans lequel le système de serveur de marché d'applications est programmé pour envoyer, à l'application client, des informations sur les portions des fichiers d'application qui ont été analysées par le système de serveur de marché d'applications, et l'application client est programmée pour vérifier la signature du fichier en générant une signature de vérification pour les fichiers d'application sur la base de l'analyse des portions des fichiers d'application qui ont été analysées par le système de serveur de marché, et en comparant la signature du fichier à la signature de vérification.

8. Système selon la revendication 1, dans lequel les informations qui concernent les fichiers d'application comprennent des informations de taille pour des fichiers particuliers des fichiers d'application, et dans lequel l'application client est programmée pour afficher un indicateur de progression du téléchargement des fichiers particuliers des fichiers d'application, l'indicateur montrant un rapport d'une quantité téléchargée à une taille agrégée des fichiers particuliers des fichiers d'application.

9. Système selon la revendication 1, dans lequel l'application client est programmée pour lancer l'installation des fichiers d'application après l'achèvement du téléchargement des fichiers particuliers des fichiers d'application.

10. Système selon la revendication 1, dans lequel l'application client est programmée pour lancer l'installation des fichiers d'application après l'achèvement du téléchargement des fichiers particuliers des fichiers d'application.

11. Système selon la revendication 1, dans lequel le système de serveur de marché d'applications est programmé pour télécharger des fichiers en réponse aux demandes vérifiées à partir de
(a) une application de marché d'applications qui correspond au système de serveur de marché d'applications et est programmée pour télécharger des fichiers pour une pluralité d'applications différentes à partir du système de serveur de marché d'applications ; et
(b) des applications particulières demandant les fichiers téléchargés pour leur propre utilisation.

12. Procédé mis en œuvre par ordinateur destiné à déterminer des fichiers d'application pour le téléchargement vers un dispositif informatique, le procédé comprenant :
la réception (402), avec un client de marché d'applications (320) s'exécutant sur l'un d'une pluralité de dispositifs informatiques clients, d'une demande d'obtention ou de mise à jour d'une application logicielle qui comprend une pluralité de fichiers d'application et qui est configurée pour s'exécuter sur l'un de la pluralité de dispositifs informatiques clients, dans lequel les fichiers d'application comprennent (a) une version particulière d'un fichier binaire d'application exécutable qui correspond à l'application logicielle et (b) une version particulière d'un ou plusieurs fichiers supplémentaires qui (i) comprend des actifs graphiques, audio ou multimédias avec l'application logicielle et (ii) est accessible par l'application logicielle, dans lequel il existe une pluralité de versions des fichiers supplémentaires qui sont ciblées pour des groupes de dispositifs respectifs sur la base, au moins en partie, d'un ou plusieurs parmi : une taille d'écran de dispositif et une capacité de traitement graphique de dispositif ;
la réception, avec le client de marché d'applications (320) et à partir d'un système de serveur de marché d'applications (330) qui fonctionne à distance à partir de l'un de la pluralité de dispositifs informatiques clients, d'informations qui concernent les fichiers d'application, dans lequel les informations identifient une version particulière des fichiers supplémentaires pour l'un de la pluralité de dispositifs informatiques clients, la version particulière des fichiers supplémentaires étant sélectionnée parmi la pluralité de versions des fichiers supplémentaires sur la base (a) d'une détermination que l'un de la pluralité de dispositifs informatiques clients appartient à un groupe de dispositifs particulier sur la base d'un ou plusieurs parmi : la taille d'écran du dispositif informatique et le processeur graphique du dispositif informatique, et (b) d'une sélection de la version particulière des fichiers supplémentaires parmi la pluralité de version des fichiers supplémentaires sur la base du groupe de dispositifs particulier auquel appartient l'un de la pluralité de dispositifs informatiques clients ;
l'identification (410) de fichiers stockés sur l'un de la pluralité de dispositifs informatiques clients correspondant aux fichiers d'application ;
la détermination (412) de fichiers particuliers des fichiers d'application à télécharger sur la base des fichiers stockés identifiés et des informations reçues qui concernent les fichiers d'application, dans lequel la version particulière du fichier binaire d'application exécutable est déterminée pour être téléchargée, et un ensemble de la version particulière des un ou plusieurs fichiers supplémentaires est déterminé pour ne pas être téléchargé ; et
le lancement (414) du téléchargement des fichiers d'application déterminés des fichiers d'application.

13. Procédé selon la revendication 12, comprenant en outre l'identification d'une défaillance par le client du marché d'applications pour télécharger un ou plusieurs fichiers, et l'instauration du téléchargement des un ou plusieurs fichiers à partir du système de serveur de marché par une application programmée pour utiliser les un ou plusieurs fichiers après le téléchargement des un ou de plusieurs fichiers.
